# EUROPEAN PATENT APPLICATION

(11) **EP 4 435 376 A1**
(43) Date of publication of application: **25.09.2024**
(21) Application number: 23163715.8
(22) Date of filing: 23.03.2023
(51) Int. Cl.: G01B 11/00, G05B 19/418, G06K 7/14, G06T 7/13

(54) **METHOD AND SYSTEM FOR MEASURING THE POSITION OF A DATA MATRIX CODE FROM THE REFERENCE EDGES OF A RECTANGULAR GLASS SHEET**

(71) Applicant: Saint-Gobain Glass France, 92400 Courbevoie (FR)
(72) Inventor: GEOFFRAY, François, 92400 Courbevoie (FR); MARTIN, Dorothée, 92400 Courbevoie (FR); BARDET, Alain, 92400 Courbevoie (FR); BAKHTA, Athmane, 93300 Aubervilliers (FR)
(74) Representative: Saint-Gobain Recherche

(57) **Abstract**

A computer implemented method (3000) for measuring the location of a data matrix code (2002) from at least one, preferably two intersecting, reference edges (2001a, 2001b) of a rectangular sheet (2001) of glass onto which said data matrix code (2002) is marked,
wherein said method takes, as input data (13000), a raster image (2003) of a portion (2003) of rectangular sheet (2001) of glass which is marked with a data matrix code (2002);
wherein said portion (2003) comprises the reference edges (2001a, 2001b) of said rectangular sheet 2001 of glass;
wherein said method (3000) provides, as output data (O3000), the distances (x, y), of the data matrix code (2002) from the reference edges (2001a, 2001b) of the rectangular sheet (2001) of glass.

## Description

### Technical field

The present invention relates to a method and a system for measuring the position of a data matrix code from the reference edges of a rectangular glass sheet onto which said data matrix code is marked.

### Technical background

It is a current practice to mark the surface of glass sheets with two-dimensional data matrix codes by means of laser radiation.

WO 2005/015478 A1, TECHNOLOGY TRANSFER SERVICE CO [JP] 17.02.2005 describes a method for designing a data matrix code on a glass substrate by means of computer-controlled laser.

WO 2007/033445 A1, LASER ENGINEERING APPLIC S A E [BE] 29.03.2007 describes a method for marking a data matrix code on a glass substrate by using the radiation of a diode-pumped femtosecond laser.

WO 2018/096258 A1, SAINT GOBAIN [FR] 31.05.2018 of describes a method for marking a data matrix code on the surface a transparent mineral glass sheet by means of a laser radiation.

Data matrix codes may allow to digitally store, as encoded information, a variety of information related to the properties, the origin, and the final use of the glass sheets and to its manufacturing process. For example, it may store a unique identification number to allow an identification of the sheets within a final glass product, such as insulated glazing, and/or store information related to their manufacturing location, their production date and time or the identity of the customer to which they may be shipped.

Within the lifecycle of the glass sheets and other related glass products, in particular within the supply chain, the data matrix codes marked on their surface are generally aimed to be detected, read and decoded several times by different kinds of detecting, reading and decoding processes and devices.

WO 2015/121550 A1, SAINT GOBAIN [FR] 20.08.2015 describes a method and a device to read a data matrix on a transparent glass sheet by means of linear camera under dark field illumination.

WO 2020/157260 A1, SAINT GOBAIN [FR] 06.08.2020 describes a method and a device to read data matrix code on a transparent glass sheet with a portable device equipped with an optical imaging system. The portable device is placed in front of the code on one side of the glass sheet while said code is illuminated by a light source located at the other side.

WO 2022/042961 A1, SAINT GOBAIN [FR] 02.03.2022 describes a method for detecting and reading data matrix code in an image of a marked glass substrate through an image processing algorithm based on chained convolutional artificial neural networks.

WO 2022/195034 A1, SAINT GOBAIN [FR] 22.09.2022 describes a method for reading data matrix code marked on a transparent glass sheet by projecting said code on a projection screen.

### Summary of the invention

### Technical problem

Irrespective of the method used in the prior art to mark a data matrix code on a sheet of glass, a common requirement to enable its subsequent reading and decoding by any reading / decoding device is that the marking method is capable of marking the codes in the same location on each of the successively processed sheets of glass.

For example, in a marking process, the data matrix code may be marked along one edge of the sheet of glass or within one of its corners, i.e., within the region where two edges are intersecting. To be efficient, the marking process should be able to mark a code on each sheet of glass at the same location, i.e., according to a setpoint for the location that the process should follow.

However, during operation of the process, drifts may occur. In the most critical cases, the actual location may so depart from the setpoint that the laser may cross over the edge of the sheet of glass and only a portion, if any, of the data matrix code may be marked on the sheet of glass. In less critical cases, the data matrix code may still be marked on the sheet of glass but at a location so far from the setpoint that, during the further processing of the sheet of glass, the reading / decoding device may be unable to find the code at the expected location. Further, if the location of the data matric code is too far from the edges of the sheet of glass, the data matrix code may become useless as a support of encoded information for the final product, e.g., an insulated glazing or a windshield.

Therefore, there is a need for a method and a system to accurately measure the position of a data matrix code from the reference edges of a rectangular glass sheet onto which said data matrix code is marked.

### Solution to the technical problem

In a first aspect of the invention, there is provided a computer implemented method for measuring the position of a data matrix code from the reference edges of a rectangular sheet of glass as described in claim 1, dependant claims being advantageous embodiments.

In a second aspect of the invention, there is provided a data processing device for carry out a method according to the first aspect of the invention.

In a third aspect of the invention, there is provided a computer program comprising instructions which, when the program is executed by a computer, cause the computer to carry out a method according to the first aspect of the invention.

In a fourth aspect of the invention, there is provided a system for measuring the position of a data matrix code from the reference edges of a rectangular sheet of glass onto which said data matrix code is marked, said system comprises a data processing device according to the second aspect of the invention.

### Advantages of the invention

An outstanding advantage of the method according to the invention is to provide an accurate measure of the distances of a data matrix code from the reference edges of a rectangular sheet of glass.

By applying the method to a plurality of sheets of glass, time-based statistics may be derived from the measured values, and the ability of a marking process to follow a setpoint value within a standard deviation range may be checked. A capability index of the process may also be computed or derived thereafter.

Another advantage of the invention is that it may be implemented on any existing lines with limited time and financial efforts. It may be used to measure the capability of any existing laser marking process provided that images of the marked codes may be acquired by a digital acquisition device and, thereafter, processed with a data processing device comprising means for carrying out the method according to the invention. It may also be used as part of a feedback control loop in the marking process to ensure that the process marks a code on each sheet of glass at the same location, i.e., according to a setpoint for the location that the process should follow.

### Brief description of drawings

Fig. 1 is a schematic representation of an example of a laser engraving process for a marking a data matrix code on a rectangular sheet of glass.
Fig. 2 is an example of a data matrix code marked on a rectangular sheet of glass.
Fig. 3 is a data flow diagram of a computer implemented method according to the first aspect of the invention.
Fig. 4 is a data flow diagram of a computer implemented method according to a first embodiment of the first aspect of the invention.
Fig. 5 is a data flow diagram of a computer implemented method according to a second embodiment of the first aspect of the invention.
Fig. 6 is a data flow diagram of a computer implemented method according to a third embodiment of the first aspect of the invention.
Fig. 7 is a physical data flow diagram of a processing data system to implement a method according to the first aspect of the invention.
Fig. 8 is an example of raster image of a portion of a rectangular sheet of glass onto which a data matrix code is marked.
Fig. 9 is an example of detection of the reference edges according to embodiments of the first aspect of the invention.
Fig. 10 is an example of histogram illustrating the distribution of distances of a data matrix code from the reference edges of rectangular sheet of glass.

### Detailed description of embodiments

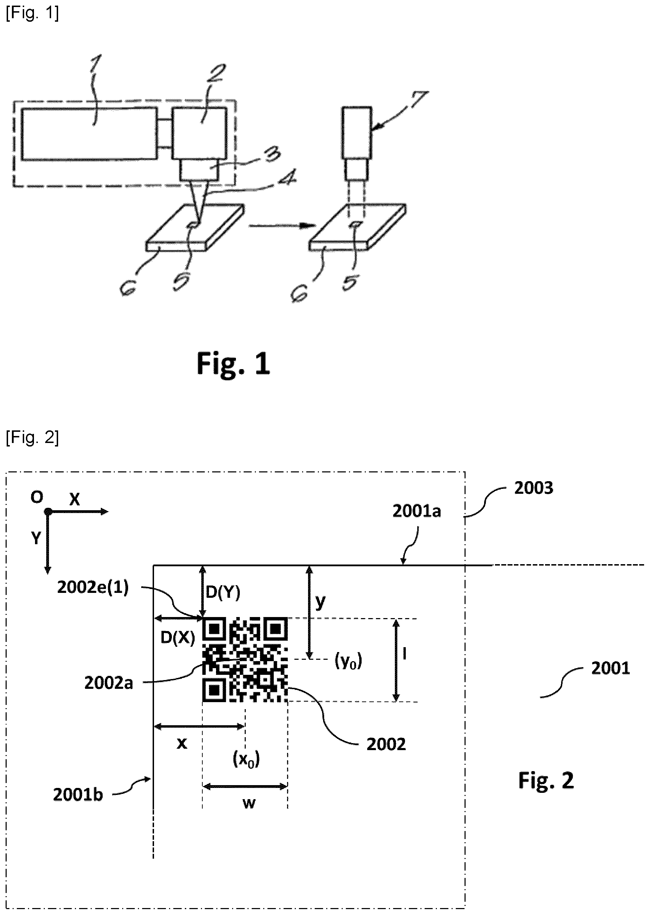

With reference to Fig. 1 from WO 2007/033445 A1, LASER ENGINEERING APPLIC S A E [BE] 29.03.2007, a laser engraving process for marking a data matrix code may comprise a laser 1, a beam transportation system 2, and an optical focusing system 3 for the laser beam 4. The data matrix code 5 is engraved onto a rectangular sheet 6 of glass. The information stored in the data matrix code 5 may then be read by a reading system 7.

The sheet of glass may be made of mineral or organic glass. Preferably, it is made of mineral glass such as soda-lime silicate glass, borosilicate glass or aluminosilicate glass.

The expression 'data matrix code' should be interpreted according to its common definition in the field of symbology for encoding information, i.e., as a two-dimensional matrix symbology as defined and described in the ISO standard 16022:2006.

With the reference to Fig. 2, a data matrix code 2002 is marked on the surface, or just underneath the surface, of the rectangular sheet 2001 of glass. The data matrix code 2002 has a width, w, and a length, l. In the case of a squared data matrix code, the length, l, is equal to the width, w.

The location of the code 2002 from the edges 2001a, 2001b of the rectangular sheet 2001 of glass may be measured through different but equivalent manners. Referring to the centroid 2002a of the code 2002, the location may be represented by the distance x, y from the edges 2001a, 2001b of the rectangular sheet 2001 of glass. Referring to one of the corners of the code 2002, it may be represented by the distances of said corner from the edges 2001a, 2001b of the rectangular sheet 2001 of glass. For example, referring to the upper corner 2002e(1), the code 2002 may be located at distance D(x), D(y) from the edges 2001a, 2001b of the rectangular sheet 2001 of glass. Besides the centroid 2002a or the edges of the code 2002, any other reference point which may be representative of the location of the code 2002 from the edges 2001a, 2001b of the rectangular sheet 2001 of glass may be used equivalently.

For the sake of clarity and conciseness, in the following, the location of the code 2002 from the edges 2001a, 2001b of the rectangular sheet 2001 of glass is referred through the location of its centroid 2002a from said edges 2001a, 2001b.

As discussed above, an efficient marking method should be able to mark the codes 2002 at the same location on each of the rectangular sheets 2001 of glass that are successively processed. In other words, the codes 2002 marked by the method should be located at a setpoint location, which is represented by the coordinates (x0, y0) on the Fig. 2.

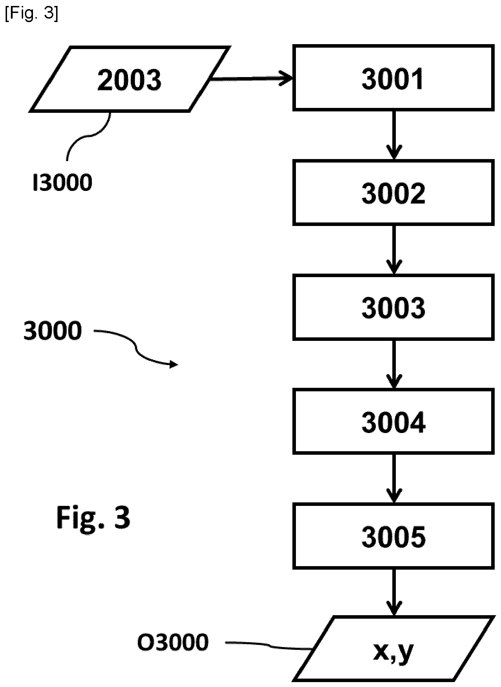

In a first aspect of the invention, with reference to Fig. 2 and Fig. 3, there is provided a computer implemented method 3000 for measuring the location of a data matrix code 2002 from at least one, preferably two intersecting, reference edges 2001a, 2001b of a rectangular sheet 2001 of glass onto which said data matrix code 2002 is marked,
wherein said method takes, as input data I3000, a raster image 2003 of a portion 2003 of the rectangular sheet 2001 of glass which is marked with a data matrix code 2002;
wherein said portion 2003 comprises the reference edges 2001a, 2001b of said rectangular sheet 2001 of glass;
wherein said method 3000 provides, as output data O3000, the distances (x, y), of the data matrix code 2002 from the reference edges 2001a, 2001b of the rectangular sheet 2001 of glass;
wherein said method 3000 comprises the following steps:
   (a) detecting 3001 the reference edges 2001a, 2001b in the raster image 2003;
   (b) computing 3002 the coordinates of the reference edges 2001a, 2001b in the reference frame (O,X,Y) of the raster image 2003;
   (c) detecting 3003 the data matrix code 2002 in the raster image;
   (d) computing 3004 the coordinates of the centroid 2002a of the data matrix code 2002 in the reference frame (O,X,Y) of the raster image 2003;
   (e) calculating 3005 the Euclidian distances (x, y) between the coordinates computed at steps (b) and (d), said calculated Euclidian distances (x, y) being the distances of the centroid 2002a of the data matrix code 2002 from the references edges 2001a, 2001b respectively.

In the context of the invention, a raster image should be understood according to its common definition in the field of computer graphics, i.e., as a two-dimensional picture, e.g., a rectangular matrix of pixels, each pixel being encoded with a given number of bits. Examples of raster images may be 1-bits, 8-bits, 16-bits, 32-bits, or 64-bits images with one or more colour channel. In most cases, a 1-bit or 8-bits image with one channel, e.g., a 1-bit black and white image or 8-bits grey scaled image, may be enough for implementing the method of the invention, but an image with a greater bit depth may work as well.

In the raster image 2003, the reference edges 2001ab 2001b of the rectangular sheet 2002 of glass may be oriented in any direction compared to the directions of the reference frame (O, X, Y) of the said raster image 2003, i.e., compared to the line and column directions of the raster image 2003. In practice, the reference edges 2001a, 2001b may advantageously be oriented in directions that are substantially parallel to the directions of the reference frame (O, X, Y) of the raster image 2003. Such arrangement may ease the detection 3001 of the two reference edges 2001a, 2001b in the raster image 2003.

At step (b), the coordinates of the reference edges 2001a, 2001b in the reference frame (O, X, Y) of the raster image may be expressed in any adapted form. For example, the coordinates of each reference edges 2001a, 2001b may be expressed as equations of line such as a*x + b*y + c = 0 where x, y are variables and (a, b, c) the coordinates of the lines.

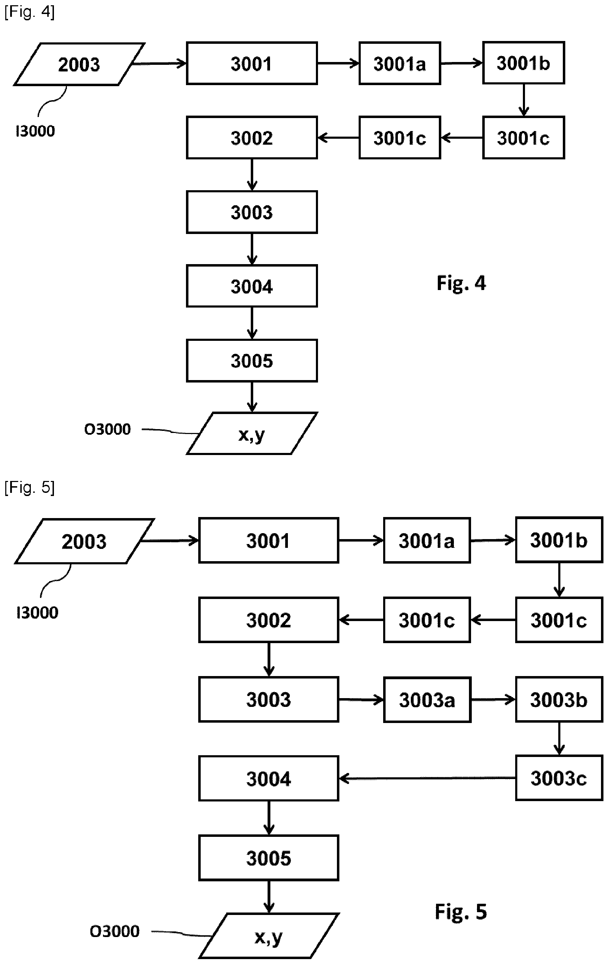

In one embodiment of the invention, with reference to Fig. 4, the step (a) of detecting the reference edges 2001a, 2001b in the raster image 2003 may comprise the following sub-steps:
(a1) convolving 3001a the raster image 2003 with an edge detection convolution kernel having a pixel size in the column direction of said raster image 2003 which is equal to or less than 10 pixels, preferably equal to or less than 5 pixels, preferably equal to 3 pixels;
(a2) convolving 3001b the raster image 2003 with an edge detection convolution kernel having a pixel size in the line direction of said raster image 2003 which is equal to or less than 10 pixels, preferably equal to or less than 5 pixels, preferably equal to 3 pixels;
(a3) summing 3001c the values of the pixels in each column of the convolved image obtained at step (a1) and in each line of the convolved image obtained at step (a2) ;
(a3) selecting 3001d the lines and the columns for which the summed values are maximum, the coordinates of said selected lines and columns are respectively the coordinates of the reference edges 2001a, 2001b.

In the context of the invention, a convolution kernel should be interpreted according to its common definition in the field of image processing, i.e., as a filter matrix used in convolution operations that are performed on an image.

According to the invention, the convolution kernel is an edge detection kernel. Preferably, the convolution kernel is selected among Prewitt operator, Sobel operator, Laplacian operator, or any operator derived thereof. The size of the convolution kernel may be adapted according to the properties, e.g., the resolution, the encoding format, the number of channels, of the raster image 2003.

In case of a raster image 2003 of a portion of a sheet 2001 of transparent glass, the reference edges 2001a, 2001b may often appear as very finely contrasted features which are not easy to detect because of the transparent nature of the glass. In a preferred embodiment, in particular when the reference edges 2001ab 2001b of the rectangular sheet 2002 are oriented in directions that are substantially parallel to the directions of the reference frame (O, X, Y) of the raster image 2003, the convolution kernel in step (a1) and the convolution kernel in step (a2) may be Prewitt operators, wherein the convolution kernel in step (a1) may have a size of 3x50 with a [-1;0;1] array as columns, and the convolution kernel in step (a2) may have a size of 50x3 with a [-1;0;1] array as lines. The so designed convolution kernels act as discrete operators that locally approximate the gradient of the intensity function within the raster images. Fine features such as the reference edges 2001a, 2001b of the rectangular sheet 2001 of glass are better detected.

In certain embodiments, with reference to Fig. 5, the step (c) of detecting the data matrix code 2002 in the raster image 2003 may comprise the following sub-steps:
(c1) convolving 3003a the raster image 2003 with a low-pass filter kernel;
(c2) binarizing 3003b the convolved raster image;
(c3) performing 3003c a pattern recognition with a bounding box pattern.

The convolution of the raster image 2003 with a low-pass filter kernel allows to blur said raster image to remove noisy pixel and white pixel corresponding to dust particles which may have been present on the sheet 2002 of glass when the raster image 2003 thereof has been acquired. In an example embodiment, the low-pass filter kernel is a gaussian filter kernel. The standard deviation of said gaussian filter kernel may be comprised between 3 and 6, preferably fixed to 5.

In certain complementary embodiments, the step (c) of detecting the data matrix code 2002 in the raster image 2003 may further comprise, between sub-steps (c2) and (c3), a sub-step (c2a) of performing a morphological opening. This operation may help to remove pixels which may be erroneously depicted as white during the binarization operation of step (c2). The pattern recognition performed at step (c3) may thereafter be more efficient.

The geometric size, e.g., the width, w, and/or the length, l, of the data matrix code 2002 may potentially vary depending on, for instance, the specifications required by the manufacturer of the sheet 2002 of glass. It then may be advantageous to be able to measure the distances (D(x), D(y)) between the reference edges 2001a, 2001b and the closest corner and/or sides of data matrix code 2002 to said two reference edges 2001a, 2001b without prior knowledge of the geometric size of the data matrix code 2002.

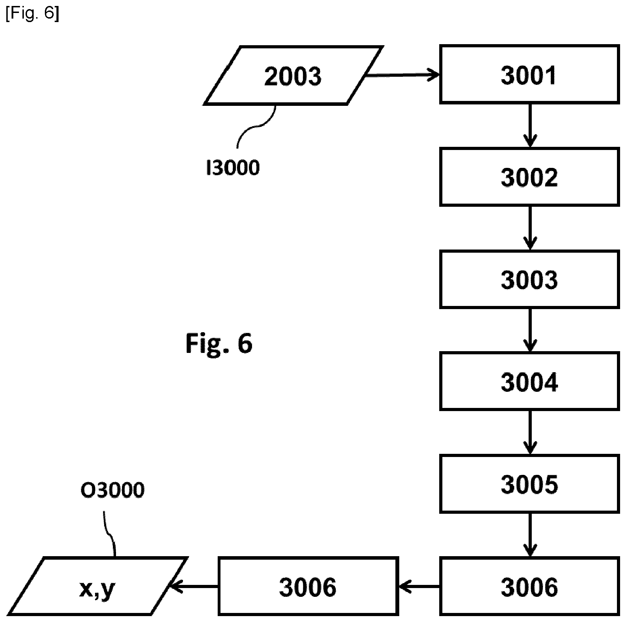

In this respect, in certain embodiments, with reference to Fig. 6, the method 3000 may further comprise the following steps:
(f) computing 3006 the coordinates of the closest corner 2002e(1) of the data matrix code 2002 to the reference edges 2001a, 2001b of the rectangular sheet 2001 of glass;
(g) calculating 3007 the Euclidian distance between the coordinates computed at steps (b) and (f), said calculated Euclidian distances being the distances (D(x), D(y)) between the closest corner 2002e(1) of the data matrix code 2002 and the reference edges 2001a, 2001b of the rectangular sheet 2001 of glass.

The calculated Euclidian distances (x, y) between the centroid 2002a of the data matrix code 2002 and the references edges 2001a, 2001b of the rectangular sheet 2001 of glass, or the Euclidian distances (D(x), D(y)) between the closest corner 2002e(1) of the data matrix code 2002 and said reference edges 2001a, 2001b may be expressed in pixels or in units of length.

A conversion scale may be fixed for converting pixels into units of length and inversely. In this respect, the method according may advantageously comprise a calibration step where raster images of objects with fixed and known geometric dimensions are processed to establish a conversion scale. Alternatively, a conversion scale may be provided as an input parameter to the method. Another way may be to provide a conversion scale calculated from the processing of raster images when the real geometric dimensions of the data matrix code are previously known.

The raster image 2003 provided as input data I3000 to the method may be a brightfield or darkfield image. Preferably, the raster image 2003 may be a darkfield image since boundaries, shapes, or edges of transparent or translucent materials may be better revealed. Darkfield raster images may then be highly advantageous for measuring the position of a data matrix code on a transparent sheet of glass as they may ease the detection of the reference edges 2001a, 2001b and of the data matrix code 2002. In case of a brightfield image, the raster may be advantageously submitted to an operation that inverts the colours of the image, in particular when the image is a binarized black and white image, as the boundaries, shapes, or edges of transparent or translucent materials may be better revealed that way.

The method according to the invention may be adapted to take, as input, a plurality of raster images in order, for instance, to get a dataset of measures of the distances between the data matrix code 2002 and the reference edges 2001a, 2001b of the rectangular sheet 2001 of glass. Statistics may then be built from this dataset in order, for instance, to evaluate the capacity of a marking process to mark a data matrix code 2002 from the reference edges 2001a, 2001b of a rectangular sheet 2001 of glass.

Accordingly, in certain embodiments, the method 3000 may take, as input data, a dataset comprising a plurality of raster images 2003 of a portion of a plurality of different rectangular sheets 2001 of glass marked with a data matrix code 2002;
wherein said method provides, as output data, a dataset of distances of the data matrix codes 2002 from the reference edges 2001a, 2001b of each of the plurality of rectangular sheet 2001 of glass;
wherein each step of said method 3000 are performed iteratively on each raster image of the dataset of the plurality of raster images 2003.

A dataset of measures of the distances between the data matrix code 2002 and the reference edges 2001a, 2001b of the rectangular sheet 2001 of glass may also be used to build statistic to evaluate the ability of a marking process to follow a setpoint value within a standard deviation range for the location of a data matrix code 2002 to be marked on a rectangular sheet 2001 of glass.

In this scope, in complementary embodiments, the method 3000 may further take, as input, a setpoint value for the distances at which a data matrix code is to be marked from the reference edges of a rectangular sheets of glass, and a standard deviation range from said setpoint value; wherein said method further comprises the following steps:
- computing the statistical distribution of the dataset of distances compared to said setpoint value;
- filtering the values within the dataset of distances which are outside the standard deviation range.

In certain embodiments, the standard deviation range may be 1,5 or 3 times the value of the standard deviation.

As output, the method may provide a percentage of values within the dataset of distances which are inside and/or outside the standard deviation range. Complementarily, an alert may be implemented informing a user when the percentage of values which are outside the standard deviation range is above a given threshold. Advantageously, the method may also comprise a step of computing at least one process capability index from the dataset of measures and provides its value as output.

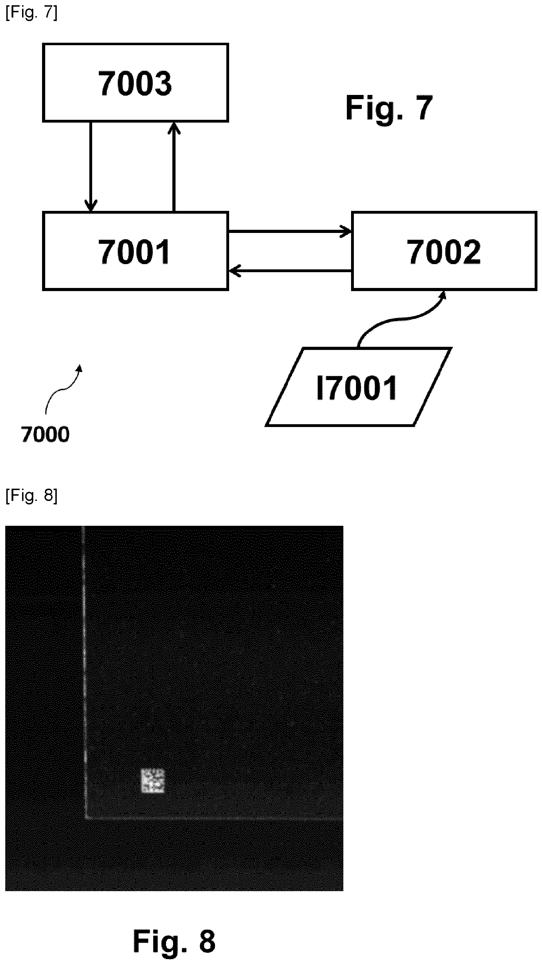

In a second aspect of the invention, with reference to Fig. 7, there is provided a data processing system 7000 comprising means for carrying out a method according to any embodiments of the first aspect of the invention.

A first example of means for carrying out the method may be a device 7001 which can be instructed to carry out sequences of arithmetic or logical operations automatically to perform tasks or actions. Such device may comprise one or more Central Processing Unit (CPU) and at least a controller device that are adapted to perform those operations.

The device may further comprise other electronic components like input/output interfaces 7003, non-volatile or volatile storages devices 7002, and buses that are communication systems for the data transfer between components inside a computer, or between computers. One of the input/output devices may be user interface for human-machine interaction, for example graphical user interface to display human understandable information.

In a third aspect of the invention, there is provided a computer program I7001 comprising instructions which, when the program is executed by a computer, cause the computer to carry out a method according to any embodiments of the first aspect of the invention.

Any kind of programming language, either compiled or interpreted, can be used to implement the steps of the method of the invention. The computer program can be part of a software solution, i.e., part of a collection of executable instructions, code, scripts or the like and/or databases.

In certain embodiments, the computer program may be stored is on a computer-readable non-transitory medium 7002. Accordingly, such computer-readable non-transitory medium 7002 may comprise instructions which, when executed by a computer, cause the computer to carry out the method according to any of the embodiments described herein.

The computer-readable medium 7002 may be preferably a non-volatile storage or memory, for example a hard disk drive or a flash/non-flash solid-state drive. The computer-readable medium can be removable storage media or a non-removable storage media as part of a computer.

Alternatively, the computer-readable medium 7002 may be a volatile memory inside a removable media. This can ease the deployment of the invention into many production sites.

In a fourth aspect of the invention, there is provided a system for measuring the position of a data matrix code 2002 from the reference edges 2001a, 2001b of a rectangular sheet 2001 of glass onto which said data matrix code 2002 is marked, wherein said system comprises:
- an acquisition device configured to acquire at least one raster image 2003 of a portion of one or a plurality of rectangular sheet 2001 of glass marked with a data matrix code 2002, wherein said portion 2003 comprises at least one, preferably two intersecting, reference edge (2001a, 2001b) of the rectangular sheet 2001 of glass;
- a data processing device 7000 according to any embodiments of the second aspect of the invention, wherein said data processing device 7000 is further configured to process the raster image 2003 acquired by the acquisition device.

Examples of acquisition devices that may be used in the system according to the fourth aspect of the invention may be found in WO 2015/121550 A1, SAINT GOBAIN [FR] 20.08.2015 and WO 2022/195034 A1, SAINT GOBAIN [FR] 22.09.2022.

### Example

An example of raster image of a portion of a rectangular sheet of transparent mineral glass onto which a data matrix code is marked is illustrated on Fig. 8. The raster image is a darkfield image in which the two intersecting reference edges of the sheet of glass and boundaries of the data matric code are better revealed than in a brightfield image.

The raster image was provided as input data to a method according to the first aspect of the invention. The detection of the reference edges was performed according to certain embodiments of the methos, wherein a Prewitt convolution kernel was applied is the lines and columns directions of the raster image. In the column direction, the convolution kernel had a size of 3x50 with a [-1;0;1] array as columns, and, in the line direction, the convolution kernel had a size of 50x3 with a [-1;0;1] array as lines. Then, the values of pixels in each column of the convolved image and in each line of the convolved image obtained were summed.

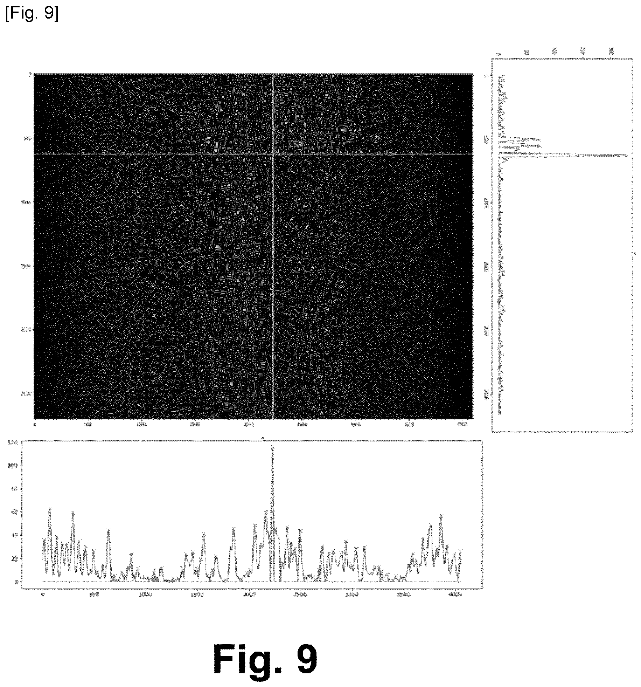

The results of the summation are illustrated on Fig. 9 where on the bottom graph is plotted the summation over the columns and on the right graph is plotted the summation over lines. The positions, i.e., the coordinates within the reference frame (O, X, Y) of the image, of the reference edges of the rectangular sheet are provided by the maxima of the summed values on each graph. Straight solid lines corresponding to the maxima are drawn onto the central image of Fig. 9 which is a reproduction of the raster image of the Fig. 8.

Once the reference edges were detected, the raster image was convolved with a Gaussian filter before to be binarized and subject to an operation of a pattern recognition with a bounding box patter. Finally, the Euclidian distances between the centroid of the data matrix and the reference edges of the rectangular sheet of glass were computed according to invention.

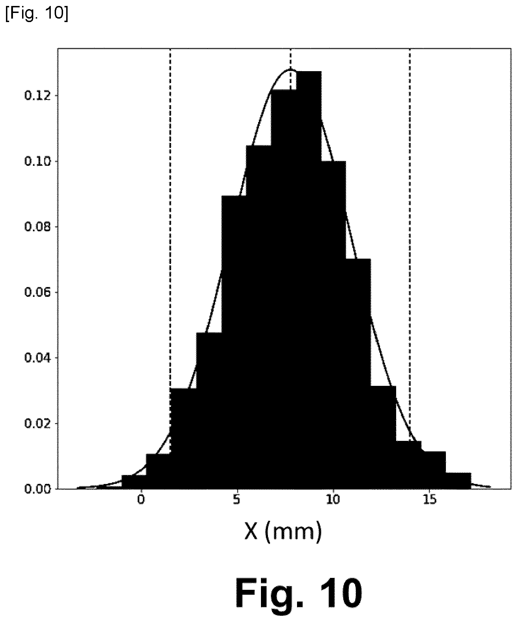

To evaluate the capability of a marking process to mark a data matrix code onto a rectangular sheet of glass according to a setpoint value for the location of said data matrix code, the method had been carried out on a dataset of raster images of a portion of a plurality of different rectangular sheets of glass marked with a data matrix code. A statistical distribution of the dataset of computed distances in the X direction was performed and is illustrated on Fig. 10.

On Fig. 10, the distances show a normal distribution spreading over a mean value of 7,5 mm, which is the setpoint value. The two dashed lines at 2 mm and 14 mm delimits a standard deviation range. Any values outside the deviation range indicate that the marking process is out of the specifications regarding the location of the data matrix code. When the relative percentage of values which are outside the deviation range compared to those which are inside reach a given threshold, the marking process may be no longer able to mark the data matrix within the specifications and may require maintenance.

The method may be advantageously implemented to monitor the capability of a marking process to mark data matrix code on a rectangular sheet of glass according to given specifications for the location of the data matrix code on said rectangular sheet. In this scope, a process capability index may be computed from the dataset of measures.

### Citation List

### Patent Literature

WO 2005/015478 A1, TECHNOLOGY TRANSFER SERVICE CO [JP] 17.02.2005.
WO 2007/033445 A1, LASER ENGINEERING APPLIC S A E [BE] 29.03.2007.
WO 2018/096258 A1, SAINT GOBAIN [FR] 31.05.2018.
WO 2015/121550 A1, SAINT GOBAIN [FR] 20.08.2015.
WO 2020/157260 A1, SAINT GOBAIN [FR] 06.08.2020.
WO 2022/042961 A1, SAINT GOBAIN [FR] 02.03.2022.
WO 2022/195034 A1, SAINT GOBAIN [FR] 22.09.2022.

### Non-Patent Literature

ISO 16022:2006 - Information technology - Automatic identification and data capture techniques - Data Matrix bar code symbology specification.

## Claims

1. A computer implemented method (3000) for measuring the location of a data matrix code (2002) from at least one, preferably two intersecting, reference edge (2001a, 2001b) of a rectangular sheet (2001) of glass onto which said data matrix code (2002) is marked,
wherein said method takes, as input data (I3000), a raster image (2003) of a portion (2003) of the rectangular sheet (2001) of glass which is marked with a data matrix code (2002);
wherein said portion (2003) comprises the reference edges (2001a, 2001b) of said rectangular sheet 2001 of glass;
wherein said method (3000) provides, as output data (O3000), the distances (x, y), of the data matrix code (2002) from the reference edges (2001a, 2001b) of the rectangular sheet (2001) of glass;
wherein said method (3000) comprises the following steps:
(a) detecting (3001) the reference edges (2001a, 2001b) in the raster image (2003);
(b) computing (3002) the coordinates of the reference edges (2001a, 2001b) in the reference frame (O,X,Y) of the raster image;
(c) detecting (3003) the data matrix code (2002) in the raster image;
(d) computing (3004) the coordinates of the centroid (2002a) of the data matrix code (2002) in the reference frame (O,X,Y) of the raster image (2003);
(e) calculating (3005) the Euclidian distances (x, y) between the coordinates computed at steps (b) and (d), said calculated Euclidian distances (x, y) being the distances of the centroid (2002a) of the data matrix code (2002) from the references edges (2001a, 2001b) respectively.

2. A method according to claim 1, wherein the step (a) of detecting the reference edges (2001a, 2001b) in the raster image (2003) comprises the following sub-steps:
(a1) convolving (3001a) the raster image (2003) with an edge detection convolution kernel having a pixel size in the column direction of said raster image 2003 which is equal to or less than 10 pixels, preferably equal to or less than 5 pixels, preferably equal to 3 pixels;
(a2) convolving (3001b) the raster image (2003) with an edge detection convolution kernel having a pixel size in the line direction of said raster image (2003) which is equal to or less than 10 pixels, preferably equal to or less than 5 pixels, preferably equal to 3 pixels;
(a3) summing (3001c) the values of the pixels in each column of the convolved image obtained at step (a1) and in each line of the convolved image obtained at step (a2) ;
(a3) selecting (3001d) the lines and the columns for which the summed values are maximum, the coordinates of said selected lines and columns are respectively the coordinates of the reference edges (2001a, 2001b).

3. A method according to claim 2, wherein the convolution kernel in step (a1) and the convolution kernel in step (a2) are Prewitt operators, wherein the convolution kernel in step (a1) has a size of 3x50 with a [-1;0;1] array as columns, and the convolution kernel in step (a2) has a size of 50x3 with a [-1;0;1] array as lines.

4. A method according to any of claims 1 to 3, wherein the step (c) of detecting the data matrix code (2002) in the raster image (2003) comprises the following sub-steps:
(c1) convolving (3003a) the raster image (2003) with a low-pass filter kernel;
(c2) binarizing (3003b) the convolved raster image;
(c3) performing (3003c) a pattern recognition with a bounding box pattern.

5. A method according to claim 5, wherein said the step (c) of detecting the data matrix code (2002) in the raster image (2003) further comprises, between sub-steps (c2) and (c3), a sub-step (c2a) of performing a morphological opening.

6. A method according to any of claims 1 to 5, wherein said method (3000) further comprises the following steps:
(f) computing (3006) the coordinates of the closest corner (2002e(1)) of the data matrix code (2002) to the reference edges (2001a, 2001b) of the rectangular sheet (2001) of glass;
(g) calculating (3007) the Euclidian distance between the coordinates computed at steps (b) and (f), said calculated Euclidian distances being the distances (D(x), D(y)) between the closest corner (2002e(1)) of the data matrix code (2002) and the reference edges (2001a, 2001b) of the rectangular sheet (2001) of glass.

7. A method according to any of claims 1 to 6, wherein the calculated distances are expressed in pixels or in unit of length.

8. A method according to any of claims 1 to 7, wherein the raster image is a darkfield image.

9. A method according to any of claims 1 to 8, wherein said method takes, as input data, a dataset comprising a plurality of raster images (2003) of a portion of a plurality of different rectangular sheets (2001) of glass marked with a data matrix code (2002);
wherein said method provides, as output data, a dataset of distances of the data matrix codes (2002) from the reference edges (2001a, 2001b) of each of the plurality of rectangular sheet (2001) of glass;
wherein each step of said method (3000) are performed iteratively on each raster image of the dataset of the plurality of raster images (2003).

10. A method according to claim 10, wherein said method (3000) further takes, as input, a setpoint value for the distances at which a data matrix code is to be marked from the reference edges of a rectangular sheets of glass, and a standard deviation range from said setpoint value;
wherein said method further comprises the following steps:
- computing the statistical distribution of the dataset of distances compared to said setpoint value;
- filtering the values within the dataset of distances which are outside the standard deviation range.

11. A method according to claim 10, wherein said method (3000) further comprise a step of computing at least one process capability index.

12. A data processing device (7000) comprising means for carrying out a method according to any of claims 1 to 11.

13. A computer program (17001) comprising instructions which, when the program is executed by a computer, cause the computer to carry out a method according to any of claims 1 to 11.

14. A system for measuring the position of a data matrix code (2002) from the reference edges (2001a, 2001b) of a rectangular sheet (2001) of glass onto which said data matrix code (2002) is marked, wherein said system comprises:
- an acquisition device configured to acquire at least one raster image (2003) of a portion of one or a plurality of rectangular sheet (2001) of glass marked with a data matrix code (2002), wherein said portion (2003) comprises at least one, preferably two intersecting, reference edges (2001a, 2001b) of the rectangular sheet (2001) of glass;
- a data processing device (7000) according to any embodiments of the second aspect of the invention, wherein said data processing device (6000) is further configured to process the raster image (2003) acquired by the acquisition device.
